# EUROPÄISCHE PATENTANMELDUNG

(11) **EP 1 500 544 A2**
(43) Veröffentlichungstag der Anmeldung: **26.01.2005**
(21) Anmeldenummer: 04103468.7
(22) Anmeldetag: 21.07.2004
(51) Int. Cl.: B60K 15/05

(54) **Vorrichtung zum Abdecken einer Öffnung eines Treibstofftanks**

(30) Priorität: 21.07.2003 US 623988
(71) Anmelder: DEERE & COMPANY, Moline, Illinois 61265-8098 (US)
(72) Erfinder: Klein, Arthur Lewis, Cedar Falls, IA 50613 (US); Gruman, Bernard Martin, Raymond, IA 50667 (US)
(74) Vertreter: Holst, Sönke, Dr.

(57) **Zusammenfassung**

Die vorliegende Erfindung betrifft eine Vorrichtung zum Abdecken einer Öffnung eines Treibstofftanks. Der Treibstofftank (10) weist ein vom Treibstofftank (10) abragendes Einfüllteil (12) und einen Tankdeckel (16) zum Abdecken eines offenen Endes des Einfüllteils (12) auf. Die Vorrichtung umfasst ein Befestigungsteil (22) und ein Abdeckelement (24). Das Befestigungsteil (22) ist an dem Einfüllteil (12) befestigbar und nimmt ein Ende des Einfüllteils (12) auf. Das Befestigungsteil (22) weist eine erste Befestigungseinheit (40, 42) auf. Das Abdeckelement (24) ist lösbar am Befestigungsteil (22) anbringbar. Das Abdeckelement (24) weist ein von einer Seite her geschlossenes Gehäuseteil (54) und eine zweite Befestigungseinheit (58, 60) auf. Das Abdeckelement (24) ist zu einer geschlossenen Position verbringbar, in welcher das Gehäuseteil (54) einen Zugang zu einem Tankdeckel (16) verhindert und in welcher ein Teil der ersten Befestigungseinheit (42) an einem Teil der zweiten Befestigungseinheit (60) gesichert werden kann, beispielsweise durch ein Schloss oder eine Verriegelung.

## Beschreibung

Die Erfindung betrifft eine verriegelbare beziehungsweise verschließbare Vorrichtung zum Abdecken bzw. zum Verschließen einer Öffnung eines Treibstofftanks.

Einige aus Plastik ausgebildete Treibstofftanks weisen einen Einfülltrichter aus Plastik auf. Ein Trichterteil aus Metall wird an das Ende des Einfülltrichters gecrimpt, um einen verschließbaren Tankdeckel aufzunehmen. Unterschiedliche Treibstofftanks erfordern jedoch unterschiedliche Einfülltrichter und ein verschließbarer Tankdeckel kann unter Umständen nicht für ein Trichterteil eines anderen Treibstofftanks verwendet werden.

Eine Vorrichtung zum Abdecken einer Öffnung eines Treibstofftanks ist aus dem Stand der Technik bekannt, beispielsweise bei einem John Deere Traktor der 7000er Serie. Bei der Benutzung dieser Vorrichtung wurde der Tankdeckel entfernt. Ein Ring mit einem langen Hebelarm war über dem Einfüllstutzen angebracht und der Tankdeckel wurde ersetzt. Sodann wurde ein Klemmring auf dem Tankdeckel montiert und am Sprengring gesichert. Der längliche Hebelarm kam mit dem Treibstofftank in Eingriff und verhinderte ein Drehen und ein Entfernen des Tankdeckels. Diese Konstruktion war jedoch anfällig Bewegungen auszuführen und verursachte Geräusche aufgrund von Vibrationen des Traktors.

Die der Erfindung zugrunde liegende Aufgabe wird darin gesehen, eine Vorrichtung der eingangs genannten Art anzugeben, durch die die vorgenannten Probleme überwunden werden. Insbesondere soll eine Vorrichtung zum Abdecken einer Öffnung eines Treibstofftanks angegeben und weitergebildet werden, welche einfach montierbar und bei einer Vielzahl von Treibstofftanks einsetzbar ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Vorrichtung ist zum Abdecken einer Öffnung eines Treibstofftanks geeignet. Der Treibstofftank weist ein vom Treibstofftank abragendes Einfüllteil und einen Tankdeckel zum Abdecken eines offenen Endes des Einfüllteils auf. Die Vorrichtung umfasst ein Befestigungsteil und ein Abdeckelement. Das Befestigungsteil ist an dem Einfüllteil befestigbar und nimmt ein Ende des Einfüllteils auf. Das Befestigungsteil weist eine erste Befestigungseinheit auf. Das Abdeckelement ist lösbar am Befestigungsteil anbringbar. Das Abdeckelement weist ein von einer Seite her geschlossenes Gehäuseteil und eine zweite Befestigungseinheit auf. Das Abdeckelement ist zu einer geschlossenen Position verbringbar, in welcher das Gehäuseteil einen Zugang zu einem Tankdeckel verhindert und in welcher ein Teil der ersten Befestigungseinheit an einem Teil der zweiten Befestigungseinheit gesichert werden kann, beispielsweise durch ein Schloss oder eine Verriegelung.

Bevorzugt ist ein Trichterteil an dem offenen Ende des Einfüllteils befestigbar. Das Befestigungsteil ist an einer äußeren Oberfläche des Trichterteils anbringbar.

Das Trichterteil oder das Befestigungsteil könnte eine Vielzahl von Ausnehmungen oder Vertiefungen aufweisen. Das jeweils andere Teil, das heißt das Befestigungsteil oder das Trichterteil, könnte eine Vielzahl von abragenden Teilen aufweisen. Ein abragendes Teil ist zumindest teilweise von einer Ausnehmung oder Vertiefung aufnehmbar, wenn das Befestigungsteil an dem Trichterteil angebracht ist.

Das Befestigungsteil könnte einen hohlen und im Wesentlichen ringförmigen Körper aufweisen. Eine Vielzahl von voneinander beabstandet angeordneten Vorsprüngen könnten im Wesentlichen in axialer Richtung von einem radialen inneren Bereich des Körpers abragen. Mit den Vorsprüngen könnte der Körper des Befestigungsteils an dem Einfüllteil koppelbar sein.

Bevorzugt weist die erste Befestigungseinheit ein erstes Befestigungselement und ein zweites Befestigungselement auf. Die zweite Befestigungseinheit weist vorzugsweise ein erstes Gehäusebefestigungselement und ein zweites Gehäusebefestigungselement auf. Das zweite Gehäusebefestigungselement könnte an dem zweiten Befestigungselement sicherbar sein. Hierzu könnten das zweite Gehäusebefestigungselement und das zweite Befestigungselement zumindest teilweise komplementär ausgebildet sein.

In einer bevorzugten Ausführungsform ragen ein erstes Befestigungselement und ein zweites Befestigungselement jeweils von gegenüberliegenden Seiten des Körpers des Befestigungsteils im Wesentlichen radial nach außen ab. Vorzugsweise weist das erste Befestigungselement eine Apertur zur drehbaren/schwenkbaren Aufnahme des ersten Gehäusebefestigungselements des Abdeckelements auf. Das zweite Befestigungselement könnte eine Öffnung zur Aufnahme eines Schlosses aufweisen.

Ein erstes Gehäusebefestigungselement und ein zweites Gehäusebefestigungselement könnte jeweils von gegenüberliegenden Seiten des Abdeckelements abragen. Vorzugsweise weist das zweite Gehäusebefestigungselement einen sich durch das zweite Gehäusebefestigungselement erstreckenden Schlitz auf.

Gemäß einer weiteren Ausführungsform weist das Befestigungsteil ein erstes Befestigungselement und ein zweites Befestigungselement auf. Das erste Befestigungselement könnte an einer ersten Seite des Körpers im Wesentlichen radial nach außen abragen und eine Apertur zur drehbaren/schwenkbaren Aufnahme des ersten Gehäusebefestigungselements aufweisen. Das zweite Befestigungselement könnte an einer der ersten Seite des Körpers gegenüberliegenden zweiten Seite im Wesentlichen radial nach außen abragen und einen vom zweiten Befestigungselement abragenden Flansch aufweisen, welcher eine Öffnung zur Aufnahme eines Schlosses aufweisen könnte.

Das zweite Gehäusebefestigungselement und das zweite Befestigungselement weisen vorzugsweise jeweils Öffnungen auf.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: in einer schematischen Darstellung eine perspektivische Ansicht eines ersten erfindungsgemäßen Ausführungsbeispiels einer verschließbaren Vorrichtung zum Abdecken einer Öffnung eines Treibstofftanks,
- Fig. 2: in einer schematischen Darstellung eine perspektivische Ansicht eines Einfüllrohrs bzw. Einfüllteils,
- Fig. 3: in einer schematischen Darstellung eine perspektivische Ansicht eines Trichterteils,
- Fig. 4: in einer schematischen Darstellung eine perspektivische Ansicht des Trichterteils aus Fig. 3, welches an dem Einfüllteil aus Fig. 2 befestigt ist,
- Fig. 5: in einer schematischen Darstellung eine perspektivische Ansicht eines Befestigungsteils und
- Fig. 6: in einer schematischen Darstellung eine perspektivische Ansicht des Abdeckelements aus Fig. 1.

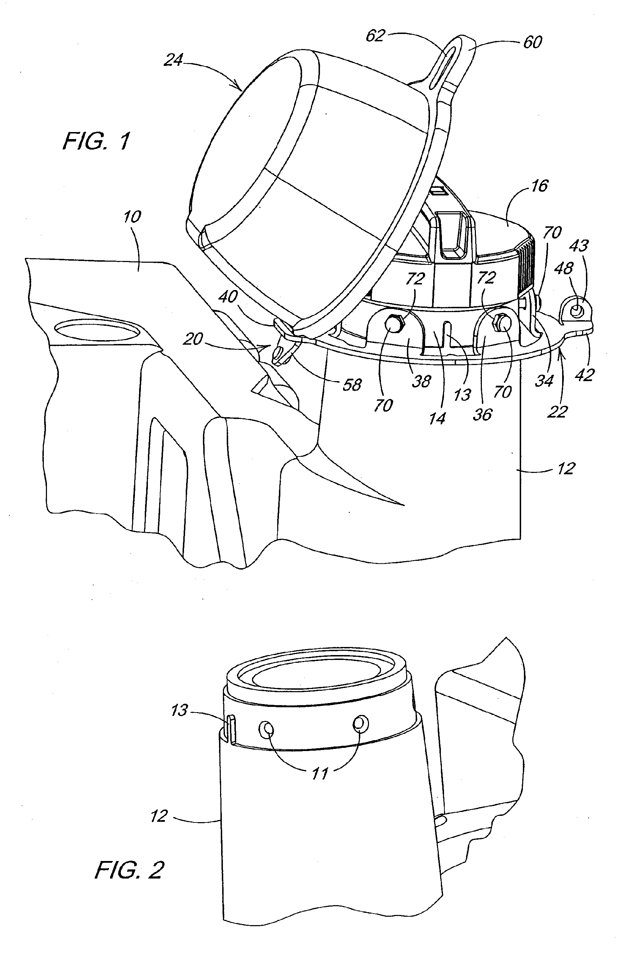

Fig. 1 zeigt einen Treibstofftank 10, welcher ein hohles zylindrisch ausgebildetes und von dem Treibstofftank 10 abragendes Einfüllteil bzw. Einfüllrohr 12 aufweist. Ein herkömmliches Trichterteil 14, vorzugsweise aus Metallblech gefertigt, ist auf das offene Ende des Einfüllrohrs 12 gecrimpt bzw. daran eingerastet. Ein herkömmlicher Tankdeckel 16 wird zum Verschließen des offenen Endes des Einfüllrohrs 12 in das Trichterteil 14 eingeführt oder eingeschraubt. Eine Vorrichtung 20 zum Abdecken der Treibstofftanköffnung umfasst ein Befestigungsteil 22 und ein Abdeckelement 24. Das Befestigungsteil 22 ist an dem Einfüllrohr 12 befestigt und nimmt ein Ende des Einfüllrohrs 12 auf. Das Abdeckelement 24 ist lösbar an den Befestigungsteil 22 anbringbar.

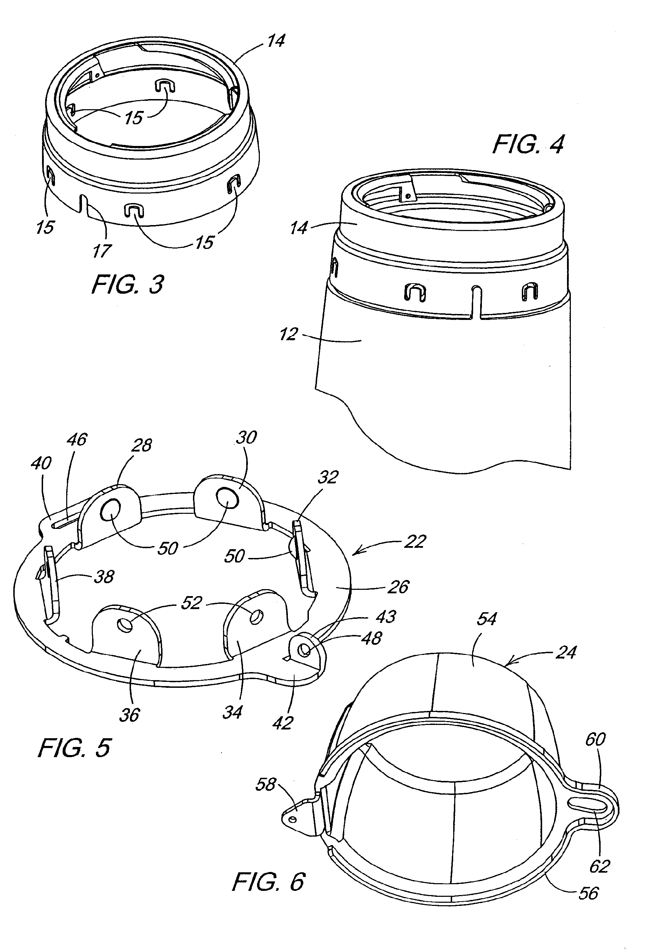

In Fig. 2 ist gezeigt, dass das Einfüllrohr 12 eine Vielzahl von Vertiefungen oder Ausnehmungen 11 aufweist, welche jeweils im gleichen Abstand zueinander angeordnet sind. Des Weiteren weist das Einfüllrohr 12 einen Vorsprung bzw. einen Grat 13 zum Ausrichten auf. Bevorzugt sind sechs Ausnehmungen 11 vorgesehen, von denen in Fig. 2 jedoch nur zwei vollständig gezeigt sind. Den Fig. 3 und 4 ist entnehmbar, dass an dem Trichterteil 14 eine Vielzahl von Befestigungsfingern 15 vorgesehen sind, welche federnd ausgebildet und voneinander beabstandet angeordnet sind, um im montierten Zustand mit den Ausnehmungen 11 zu fluchten. Wenn die Befestigungsfinger 15 teilweise von den Ausnehmungen 11 aufgenommen sind, ragen sie nach innen in die Ausnehmungen 11 hinein. Hierdurch formen die Befestigungsfinger 15 ihrerseits Ausnehmungen oder Vertiefungen in der Oberfläche des Trichterteils 14. Das Trichterteil 14 umfasst zwei Nuten beziehungsweise Rillen 17, welche den Grat 13 aufnehmen.

Fig. 5 ist entnehmbar, dass das Befestigungsteil 22 einen hohlen kranz- oder ringförmigen Körper 26 aufweist. Eine Vielzahl von im gleichen Abstand zueinander angeordneten Vorsprüngen 28, 30, 32, 34, 36 und 38 ragen in axialer Richtung von einem radialen inneren Abschnitt des Körpers 26 ab. Das Befestigungsteil 22 umfasst ein erstes und eine zweites Befestigungselement 40, 42. Das erste Befestigungselement 40 ragt von einer Seite des Körpers 26 im Wesentlichen in radialer Richtung nach außen ab. Das zweite Befestigungselement 42 ragt von einer hierzu gegenüberliegenden Seite des Körpers 26 im Wesentlichen in radialer Richtung nach außen ab. Das Befestigungselement 40 weist eine darin ausgebildete längliche Apertur oder einen Schlitz 46 auf. Das Befestigungselement 42 umfasst einen nach oben abragenden Flansch 43, der eine sich durch den Flansch 43 erstreckende Öffnung 48 aufweist. Die Vorsprünge 28, 30, 32 weisen jeweils ein in radialer Richtung nach innen abragendes Teil 50 auf. Jedes abragende Teil 50 wird von einer entsprechenden Vertiefung bzw. Ausnehmung aufgenommen, welche durch einen nach innen abragenden Befestigungsfinger 15 gebildet ist. Die Vorsprünge 34, 36 und 38 weisen jeweils eine Bohrung 52 mit einem Gewinde auf, welche sich in radialer Richtung durch den jeweiligen Vorsprung 34, 36, 38 erstreckt.

Bezugnehmend auf die Fig. 1 und 6 umfasst das Abdeckelement 24 ein zumindest zu einer Seite hin geschlossenes Gehäuseteil 54 und eine Basis oder eine Umrandung 56. Ein erstes Gehäusebefestigungselement 58 ragt von der Umrandung 56 in radialer Richtung nach außen ab, um in den Schlitz 46 drehbar/schwenkbar eingeführt zu werden. Ein zweites Gehäusebefestigungselement 60 ragt von der Umrandung 56 von einer bezüglich des ersten Gehäusebefestigungselements 58 gegenüberliegenden Seite in radialer Richtung nach außen ab. Ein länglicher Schlitz 62 erstreckt sich durch das zweite Gehäusebefestigungselement 60. Das erste Gehäusebefestigungselement 58 kann aus dem Schlitz 46 entfernt werden. Das Abdeckelement 24 kann von dem Tankdeckel 16 und dem Befestigungsteil 22 entfernt werden.

Fig. 1 ist entnehmbar, dass das Befestigungsteil 22 an dem Trichterteil 14 mit Hilfe von Bolzen oder Schrauben 70 befestigt ist. Vorzugsweise sind Anschweißmuttern 72 an den Vorsprüngen 34, 36, 38 angeschweißt. Die Bolzen bzw. Schrauben 70 werden in die Anschweißmuttern 72 geschraubt, bis sie fest an der entsprechenden Ausnehmung anliegen bzw. teilweise darin aufgenommen sind, welche von den nach innen abragenden Befestigungsfingern 15 gebildet ist, und somit das Befestigungsteil 22 an dem Trichterteil 14 befestigen. Alternativ könnten - was in den Fig. jedoch nicht gezeigt ist - Federmuttern vorgesehen sein, um die Schrauben 70 aufzunehmen. Das Abdeckelement 24 kann - bezogen auf Fig. 1 - im Uhrzeigersinn gedreht bzw. geschwenkt werden, bis der Schlitz 62 den Flansch 43 aufnimmt. In dieser Position deckt das Abdeckelement 24 den Tankdeckel 16 ab und verhindert einen Zugang des Tankdeckels 16. Ein herkömmliches Schloss, insbesondere ein Vorhänge- bzw. Bügelschloss, kann durch die Öffnung 48 eingeführt werden, um das Abdeckelement 24 in dieser Position zu sichern.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter den Schutzbereich der Patentansprüche fallen.

## Patentansprüche

1. Vorrichtung zum Abdecken einer Öffnung eines Treibstofftanks, wobei der Treibstofftank (10) ein vom Treibstofftank (10) abragendes Einfüllteil (12) und einen Tankdeckel (16) zum Abdecken eines offenen Endes des Einfüllteils (12) aufweist, mit einem Befestigungsteil (22) und einem Abdeckelement (24), wobei das Befestigungsteil (22) an dem Einfüllteil (12) befestigbar ist und ein Ende des Einfüllteils (12) aufnimmt und eine erste Befestigungseinheit (40, 42) aufweist, wobei das Abdeckelement (24) lösbar am Befestigungsteil (22) anbringbar ist, wobei das Abdeckelement (24) ein von einer Seite her geschlossenes Gehäuseteil (54) und eine zweite Befestigungseinheit (58, 60) aufweist, wobei das Abdeckelement (24) zu einer geschlossenen Position verbringbar ist, in welcher das Gehäuseteil (54) einen Zugang zu einem Tankdeckel (16) verhindert und in welcher ein Teil der ersten Befestigungseinheit (42) an einem Teil der zweiten Befestigungseinheit (60) gesichert werden kann, beispielsweise durch ein Schloss oder eine Verriegelung.

2. Vorrichtung nach Anspruch 1, **dadurch gekennzeichnet, dass** ein Trichterteil (14) an dem offenen Ende des Einfüllteils (12) befestigbar ist und dass das Befestigungsteil (22) an einer äußeren Oberfläche des Trichterteils (14) anbringbar ist.

3. Vorrichtung nach Anspruch 2, **dadurch gekennzeichnet, dass** das Trichterteil (14) oder das Befestigungsteil (22) eine Vielzahl von Ausnehmungen oder Vertiefungen (15) aufweist, dass das Befestigungsteil (22) oder das Trichterteil (14) eine Vielzahl von abragenden Teilen (50) aufweist, wobei ein abragendes Teil (50) zumindest teilweise von einer Ausnehmung oder Vertiefung (15) aufnehmbar ist, wenn das Befestigungsteil (22) an dem Trichterteil (14) angebracht ist.

4. Vorrichtung nach einem der vorhergehenden Ansprüche, **dadurch gekennzeichnet, dass** das Befestigungsteil (22) einen hohlen und im Wesentlichen ringförmigen Körper (26) aufweist, dass eine Vielzahl von voneinander beabstandet angeordneten Vorsprüngen (28, 30, 32, 34, 36, 38) im Wesentlichen in axialer Richtung von einem radialen inneren Bereich des Körpers (26) abragt und dass mit den Vorsprüngen (28, 30, 32, 34, 36, 38) der Körper (26) des Befestigungsteils (22) an dem Einfüllteil (12) koppelbar ist.

5. Vorrichtung nach einem der vorhergehenden Ansprüche, **dadurch gekennzeichnet, dass** die erste Befestigungseinheit (40, 42) ein erstes Befestigungselement (40) und ein zweites Befestigungselement (42) aufweist, dass die zweite Befestigungseinheit (58, 60) ein erstes Gehäusebefestigungselement (58) und ein zweites Gehäusebefestigungselement (60) aufweist und dass das zweite Gehäusebefestigungselement (60) an dem zweiten Befestigungselement (42) sicherbar ist.

6. Vorrichtung nach einem der vorhergehenden Ansprüche, **dadurch gekennzeichnet, dass** ein erstes Befestigungselement (40) und ein zweites Befestigungselement (42) jeweils von gegenüberliegenden Seiten des Körpers (26) des Befestigungsteils (22) im Wesentlichen radial nach außen abragen, dass vorzugsweise das erstes Befestigungselement (40) eine Apertur (46) zur drehbaren/schwenkbaren Aufnahme des ersten Gehäusebefestigungselements (58) des Abdeckelements (24) aufweist, und dass das zweite Befestigungselement (42) eine Öffnung (48) zur Aufnahme eines Schlosses aufweist.

7. Vorrichtung nach einem der vorhergehenden Ansprüche, **dadurch gekennzeichnet, dass** ein erstes Gehäusebefestigungselement (58) und ein zweites Gehäusebefestigungselement (60) jeweils von gegenüberliegenden Seiten des Abdeckelements (24) abragen, dass vorzugsweise das zweite Gehäusebefestigungselement (60) einen sich durch das zweite Gehäusebefestigungselement (60) erstreckenden Schlitz (62) aufweist

8. Vorrichtung nach Anspruch 7, **dadurch gekennzeichnet, dass** das Befestigungsteil (22) ein erstes Befestigungselement (40) und ein zweites Befestigungselement (42) aufweist, dass das erste Befestigungselement (40) an einer ersten Seite des Körpers (26) im Wesentlichen radial nach außen abragt und eine Apertur (46) zur drehbaren/schwenkbaren Aufnahme des ersten Gehäusebefestigungselements (58) aufweist, und dass das zweite Befestigungselement (42) an einer der ersten Seite des Körpers (26) gegenüberliegenden zweiten Seite im Wesentlichen radial nach außen abragt und einen vom zweiten Befestigungselement (42) abragenden Flansch (43) aufweist, welcher eine Öffnung (48) zur Aufnahme eines Schlosses aufweist.

9. Vorrichtung nach einem der Ansprüche 5 bis 8, **dadurch gekennzeichnet, dass** das zweite Gehäusebefestigungselement (60) und das zweite Befestigungselement (42) jeweils Öffnungen (62, 48) aufweisen.
